# EUROPEAN PATENT APPLICATION

(11) **EP 1 363 212 A1**
(43) Date of publication of application: **19.11.2003**
(21) Application number: 02251005.1
(22) Date of filing: 14.02.2002
(51) Int. Cl.: G06F 17/60

(54) **A method of detail follow up**

(30) Priority: 10.12.2001 GB 0129472
(71) Applicant: Crosbie, Errol, Woking, Surrey GU22 7HF (GB)
(72) Inventor: Crosbie, Errol, Woking, Surrey GU22 7HF (GB)
(74) Representative: Spencer, Michael David, Dr.

(57) **Abstract**

A method of detail follow-up comprising the following steps:
(a) a panel of clients is pre-recruited to report on details,
(b) upon completion of a detail a panel client contacts a central reporting service,
(c) the central reporting service instructs the client on pre-determined criteria either to fill out an already provided questionnaire or to do nothing,
(d) the central reporting service conducts a telephone interview within a pre-determined time period with a selected number of the reporting clients, and
(e) within a pre-determined period of time the central reporting service compiles a report with the relevant sales data.

## Description

The present invention relates to a method of detail follow-up. The present method especially relates to the pharmaceutical industry.

Pharmaceutical companies allocate most of their promotional budget to their sales force comprising of representatives who visit doctors to tell them about the company's products. This sales pitch or conversation is called a detail. It can either be conducted as a one to one individual, face-to-face conversation or can involve one representative simultaneously detailing several doctors, also called a sales meeting.

As large amounts of money are involved in paying for and supporting the sales forces, companies spend considerable sums of money trying to monitor the performance and effectiveness of their sales forces. They can have several sales teams, one such pharmaceutical company has 8 sales teams, each one comprising of about 70 representatives.

The situation is complex given that the doctor is not the end consumer of the drugs, he or she merely prescribes them. Success might be gauged by the number of scripts written but the patient may fill the prescription at a chemist located far from the doctor's surgery. Thus monitoring representative sales effectiveness is very complex compared with for instance monitoring the effectiveness of an insurance or double-glazing salesman.

A previously proposed method for monitoring success is called Detail Follow-Ups (DFU's) or 'Verbatims' and comprises the following steps:
(1) The sales representatives supply information about each session with all doctors they have detailed to their parent company. This is currently usually done electronically. The frequency of reporting varies. Some company's representatives report on a weekly basis. Others companies work on a once a week, twice weekly or even a daily reporting basis.
(2) The pharmaceutical company supplies their appointed research agency with the names of detailed doctors and the dates on which the detail has taken place.
(3) These doctors are then contacted by the research agency, usually by phone to set up a time for a telephone interview.
(4) The interview takes place between the research agency and the doctor discussing the earlier detail.

This has the disadvantage that considerable time can have been taken in the representatives getting the names of the detailed doctors to the pharmaceutical company, these being transferred to the research agency and appointments being made with doctors who are agreeable to be interviewed.

This means the subsequent interviews about the detail with the doctors take place on average several days after the actual detail by the representative. A maximum time is usually specified as 10 working days, an average could be 6 to 8 working days.

The longer the elapsed period the less accurate is the doctor's recall of the previous discussion with the representative. The doctor then either begins to guess what was said or admits to having forgotten.

If the company representatives report directly to the research agency then the average lapse time between detail and interview could be less say about three days.

Therefore, due to the complexity of the method and the time lapse involved, the results are relatively inaccurate.

An alternative previously proposed method is sometimes called a diary study and involved pre-recruited doctors report after being detailed by unspecified or any pharmaceutical company representative or from a list of specified pharmaceutical companies. The doctors self-complete a pre-sent form or questionnaire of the detail. This record is written or typed and e-mailed or sent to the research agency.

As data is being collected on each and every detail this tends to mean that in order for it to be cost-effective the forms or questionnaires are likely to be relatively short. This has the disadvantage that the data collected is limited in scope.

An additional disadvantage is that the doctor may complete the questionnaire while a detail is actually taking place. This is undesirable as the representative being aware of the doctor reporting the session will almost certainly modify his or her approach so that the report on the detail is as positive as possible.

It is an aim of the present invention to provide a method of detail follow-up which addresses the previous disadvantages.

Accordingly the present invention is directed to a method of detail follow-up comprising the following steps:
(1) a panel of clients is pre-recruited to report on details,
(2) upon completion of a detail a panel client contacts a central reporting service,
(3) the central reporting service instructs the client on pre-determined criteria either to fill out an already provided questionnaire or to do nothing,
(4) the central reporting service conducts a telephone interview within a pre-determined time period with a selected number of the reporting clients, and
(5) within a pre-determined period of time the central reporting service compiles a report with the relevant sales data.

Preferably, the clients are doctors or other trained medical personnel. In a preferred embodiment the panel of clients or doctors is approximately 600 in strength. Advantageously the contact with the central reporting service comprises a telephone answering service accessing a computer programme and asking 8 questions. Preferably the telephone interview if conducted takes place within 36 hours of the detail. In a preferred embodiment the report is provided on a weekly basis. Advantageously the central reporting service and information thereon is run by a computer program with pre-determined criteria programmed.

A preferred example of the method will now be discussed herein below with reference in places to a particular pharmaceutical company called pharmaceutical company A.

The panel of about 600 doctors is pre-recruited. Trials of such a panel so far indicates that doctors tend to remain on the panel on average for six months or more. As doctors decide to drop off the panel so they are replaced.

The panel is monitored on a weekly basis. This can be done by the computer programme. The panel can then be modified according to performance to provide results which represent the profile of the pharmaceutical company's sales effort by Sales District. The self reporting forms are pre-sent self completion questionnaires.

The panel doctors agree to contact the central reporting centre by any means - fax, e-mail or phone as soon as they can, preferably within hours, to report a detail by any pharmaceutical company

The panel of doctors then respond to instructions from the central reporting centre. These instructions vary according to the products upon which the doctor has just been detailed

The doctors might be asked to do nothing.

The doctors might be asked to self-complete pre-sent questionnaires. These must be completed by the doctor within 24 hours of the detail by the representative.

A number of these doctors are asked to, and as a pre-requisite of the pre-recruitment have to be willing to, undertake a telephone interview within 36 hours (unless a weekend intervenes) of the detail by the representative. The interview varies in length but can be anywhere between 15 and 45 minutes duration.

Critically, the average lapse time between a representative detail and an interview is about 7 hours. The maximum lapse is 36 hours, (except where a weekend intervenes). The minimum lapse can literally be minutes

The computer programme allows anyone in the central reporting centre to answer a phone call from a panel doctor, to input the answers to 8 questions and to give the doctor appropriate instructions.

This enables the phones to be answered promptly as unanswered phones would quickly lead to doctors becoming disillusioned and dropping off the panel.

The computer programme automatically updates a database so that the performance of the panel is available at any time and some real-time results are available. The software enables the pharmaceutical company to have a direct feed, should they so desire, to the data although obviously not to the individuals involved in line with Data Protection Act and MRS regulations or Code of Conduct.

An additional computer programme can link the action of the doctor to an accounts database making the quarterly payments to the panel doctors a semi-automatic process and not subject to human failings or forgetfulness.

Thus the doctor is dissuaded from completing a questionnaire in the presence of the representative as at the time, the doctor does not know whether this is a session for which he will be asked to complete a questionnaire or not. The doctor cannot conduct a telephone interview in the presence of a representative.

Prior to joining the panel the doctor is remunerated to read the information and to consider what is involved

He or she is then compensated for the time, co-operation and effort, according to the number of times he or she reports to the central reporting centre and the action required as a result of the instruction given. In general, a do-nothing credits the doctor with little money, a questionnaire credits the doctor with a modest sum and a telephone interview involves a considerable financial credit.

Examples of the advantages of the present method will now be discussed with reference to specific examples.

### Example 1

Drug companies have never been able to establish with accuracy the **order** in which their products are being detailed before. The order of detail is derived from considerable marketing decision making. Products detailed first generally receive more attention from the doctor than those detailed subsequently. Product teams within drug companies 'pay' or are charged by their company differing sums of money against their profit from sales according to the detail position of their specific product.

The telephone interview has proven that representatives detail in a most haphazard order. On the basis of the pilot alone the pharmaceutical company A now has information to prove what was previously not provable. As the order can now be measured the intended order will prevail.

The product teams are also able to be charged according to the actual rather than intended detail position. This is very important to the teams due to the budget principals outlined above.

### Example 2

The pharmaceutical company is now able to compare their representative's performance and method of detailing with a greater level of accuracy.

Prior to the pilot phase, the pharmaceutical company A thought they had the United Kingdom's best sales representatives.

The pilot phase showed this to be far from the case and indicated many areas of weakness which their Training Department is now setting out to redress.

### Example 3

As the Monitor covers competitor details as well, the client is able to know what competitors are actually saying against or about the drug companies own products. This allows the client's representatives to have appropriate rebuttal material in their bags.

Prior to the pilot the pharmaceutical company A was convinced that a competitor was being very derogatory about one of their products. The telephone interviews showed conclusively that this was not the case. The client then adjusted their own sales approach into a more positive, general one rather than fighting inappropriately a non-existent sales war versus a single competitor product.

### Example 4

For the first time, the pharmaceutical company A has been able to break accurate sales information down to their sales districts level. The structure of the panel and its continuous modification allowed by the software allows for this.

Thus, implications for retraining of particular District managers and their representatives are clear. Pharmaceutical company A simply did not have such data available by any other method

Now with such information available their training department is already looking at known areas of weakness - both geographically and within the sales approach - to improve performance.

### Example 5

Previously, hard-working, diligent representatives provided data of their sales calls in greater volume and with greater accuracy than their less diligent colleagues. This information was then passed to the research agency to use as their detail follow-up database. Cases were known where representatives would not report on poor details for fear of it being involved in a follow-up interview.

Thus, traditional detail follow-ups were based on a biased sample from the better representatives and their better details. The result was a reduced level of credibility of the results.

The present method has completely removed the representatives from the loop. Panel doctors report on both the good and the bad representatives, the good and the bad details. Thus, details reported upon are representative rather than being biased.

### Example 6

What this approach does above all is offer data which have a level of credibility not achieved previously. The previous 'get-out' that the data were collected days after the detail and thus are inaccurate no longer applies. Doctors can report with accuracy that which occurred several hours, rather than days, earlier. Sales managers, representatives and trainers simply have to believe the data collected via this new method (and the pilot showed that they do).

This credibility gap has been reduced by the immediacy of the present method.

As a result, the pharmaceutical company A's Training, Marketing and Sales departments are for the first time working as a single unit rather than sales defending its territory behind the excuse of inaccurate data.

### Example 7

Call rates are an intrinsic part of the monitoring of representative performance. Part of the commission structure is based upon call rates. Clearly, call-rates are an important element affecting the amount of marketing 'noise' created in the market place relative to the competition.

Prior to the present method, call rates were dependent upon the representatives themselves reporting their own call rates to the company.

The panel actually measures the call rate as seen from the doctor's point of view. A call logged by a representative which could simply be saying 'hello' in the surgery car park is not logged by a panel doctor as a call.

The disparity between supposed and actual call rates was highlighted in the pilot.

In addition, whereas the pharmaceutical company A thought its marketing "noise" was greater through its having a higher than average call rate, this was disproved.

The benefit of unambiguous call-rate data is clear.

## Claims

1. A method of detail follow-up comprising the following steps:
(1) a panel of clients is pre-recruited to report on details,
(2) upon completion of a detail a panel client contacts a central reporting service,
(3) the central reporting service instructs the client on pre-determined criteria either to fill out an already provided questionnaire or to do nothing,
(4) the central reporting service conducts a telephone interview within a pre-determined time period with a selected number of the reporting clients, and
(5) within a pre-determined period of time the central reporting service compiles a report with the relevant sales data.

2. A method according to claim 1, **characterised in that** the clients are doctors or other trained medical personnel.

3. A method according to claim 1 or claim 2, **characterised in that** the panel of clients is approximately 600 in strength.

4. A method according to any preceding claim, **characterised in that** the contact with the central reporting service comprises a telephone answering service accessing a computer programme and asking 8 questions.

5. A method according to any preceding claim, **characterised in that** the telephone interview if conducted takes place within 36 hours of the detail.

6. A method according to any preceding claim, **characterised in that** the report is provided on a weekly basis.

7. A method according to any preceding claim, **characterised in that** the central reporting service and information thereon is run by a computer program with pre-determined criteria programmed.
